# EUROPEAN PATENT APPLICATION

(11) **EP 4 714 268 A1**
(43) Date of publication of application: **25.03.2026**
(21) Application number: 24836067.9
(22) Date of filing: 03.07.2024
(51) Int. Cl.: A23L 5/00, A23J 3/00, A23J 3/16, A23L 11/00

(54) **FOOD COMPOSITION AND METHOD FOR PRODUCING FOOD COMPOSITION**

(30) Priority: 03.07.2023 JP 2023109596
(71) Applicant: Kikkoman Corporation, Noda-shi, Chiba 278-8601 (JP)
(72) Inventor: MIYAMASU, Ayuko, Noda-shi, Chiba 278-8601 (JP); KAWAMOTO, Hiroshi, Noda-shi, Chiba 278-8601 (JP); KAN, Eiichiro, Noda-shi, Chiba 278-8601 (JP); YUZUKI, Masanobu, Noda-shi, Chiba 278-8601 (JP)
(74) Representative: Kramer Barske Schmidtchen Patentanwälte PartG mbB
(86) International application number: PCT/JP2024/024058
(87) International publication number: WO 2025/009554

(57) **Abstract**

A food composition contains a fermented product of a plant material, and has a breaking stress of 1.00 N/m² or more at a time point when a breaking strain rate is 50% in a state of being formed into a patty shape.

## Description

### TECHNICAL FIELD

The present invention relates to a food composition and a method for producing the food composition.

### BACKGROUND ART

Meat is abundant in vitamins and nutrients such as protein and minerals and is a nutritionally important food material. However, excessive intake of meat can cause various chronic diseases including metabolic syndrome because meat contains a large amount of lipids, in particular saturated fatty acids, and because the energy thereof is excessive also compared with other food materials.

Therefore, in order to prevent excessive intake of meat, use of a meat-like food, which appears just like a processed meat food, has been attracting attention. While a meat-like food contains less saturated fatty acids and has lower energy than meat, the meat-like food is a food using a food material containing a similar amount of protein to that of meat. Intake of a meat-like food as an alternative to a meat food can lead to prevention, improvement, or the like of a lifestyle-related disease such as metabolic syndrome.

As a representative of meat-like food, a food using grains such as soybeans is processed for various applications and used for a food composition and a food (Patent Literatures 1 and 2).

### CITATION LIST

### PATENT LITERATURE

Patent Literature 1: JP6396517B
Patent Literature 2: JP7216500B

### SUMMARY OF INVENTION

### TECHNICAL PROBLEM

However, a meat-like food according to the related art using a grain raw material such as soybean has a texture similar to that of minced meat, particularly a lack of juiciness, and lacks much elasticity and the livestock meat-like fibrous texture. In particular, a meat-like food containing a grain raw material rich in dietary fibers, such as a soy pulp, tends to have a dry texture, be brittle, and crumble easily.

Therefore, an object of the present invention is to provide a food composition having a livestock meat-like fibrous texture.

### SOLUTION TO PROBLEM

As a result of intensive studies to solve the above problems, the present inventors have found that a food composition exhibiting a specific value of a breaking stress has a livestock meat-like fibrous texture.

The present invention is as follows.
[1] A food composition containing:
   a fermented product of a plant material,
   in which a breaking stress at a time point when a breaking strain rate is 50% is 1.00 N/m² or more in a state of being formed into a patty shape.
[2] The food composition according to [1] above, in which the plant material is a grain-derived raw material.
[3] The food composition according to [1] or [2] above, in which the fermented product is a fermented product of a *koji* mold.
[4] The food composition according to [1] or [2] above, in which, in a sieving test using the food composition, a ratio of a mass of particles having a particle diameter of 1,000 µm or more and less than 4,500 µm to a total mass of the food composition is 5% or more.
[5] The food composition according to [1] or [2] above,
   in which the food composition contains water,
   a ratio of a mass of the fermented product to a total mass of the food composition is 5% to 40%, and a ratio of a mass of plant-based protein other than the fermented product to the total mass of the food composition is 4% to 40%.
[6] The food composition according to [1] or [2] above,
   in which the food composition does not contain water,
   a ratio of a mass of the fermented product to a total mass of the food composition is 20% to 100%, and a ratio of a mass of plant-based protein other than the fermented product to the total mass of the food composition is 0% to 80%.
[7] The food composition according to [1] or [2] above, in which the fermented product is a fermented product obtained by subjecting the plant material to a fermentation treatment and then performing drying.
[8] A method for producing a food composition, the method including:
   fermenting a plant material with a microorganism,
   in which the obtained food composition is the food composition according to [1] or [2] above.
[9] The method for producing a food composition according to [8], further including:
   drying a resultant obtained by fermenting the plant material with the microorganism.

### ADVANTAGEOUS EFFECTS OF INVENTION

The food composition exhibiting a specific value of breaking stress, which is one aspect of the present invention, has an excellent livestock meat-like fibrous texture.

### BRIEF DESCRIPTION OF DRAWINGS

[FIG. 1] FIG. 1 is a photograph of a patty-shaped drum-dried fermented soy pulp.
[FIG. 2] FIG. 2 is a graph showing a breaking stress at a time point when a breaking strain rate is 50% in the case of a soy pulp powder having subjected to a patty shape forming step, the patty-shaped drum-dried fermented soy pulp, and a patty-shaped freeze-dried fermented soy pulp.
[FIG. 3] FIG. 3 is a graph showing a particle size distributions of each of the soy pulp powder, the drum-dried fermented soy pulp, and the freeze-dried fermented soy pulp.
[FIG. 4] FIG. 4 is a graph showing a breaking stress at a time point when a breaking strain rate is 50% in the case of a patty-shaped drum-dried fermented soy pulp, a patty-shaped freeze-dried fermented soy pulp made of only particles having a particle diameter of 1,000 µm to 2,800 µm, and a patty-shaped freeze-dried fermented soy pulp made of only particles having a particle diameter out of 1,000 µm to 2,800 µm.
[FIG. 5] FIG. 5 is a graph showing a breaking stress at a time point when a breaking strain rate is 50% in the case of a patty-shaped drum-dried fermented soy pulp (strain ATCC22788) and a patty-shaped drum-dried fermented soy pulp (strain ATCC1011).
[FIG. 6] FIG. 6 is a graph showing particle size distributions of a drum-dried fermented soy pulp (strain ATCC22788) and a drum-dried fermented soy pulp (strain ATCC1011).
[FIG. 7] FIG. 7 is a graph showing a breaking stress at a time point when a breaking strain rate is 50% in the case of patties of No. 1 to No. 5.

### DESCRIPTION OF EMBODIMENTS

Hereinafter, the present invention will be described in detail, but these are examples of preferred embodiments. The present invention is not limited to these contents.

The expression "to" of a numerical range is a range including the numerical values before and after it. For example, "0 mass% to 100 mass%" means a range of 0 mass% or more and 100 mass% or less.

In the present description, the ratio on a weight basis (percentage, parts, etc.) is the same as the ratio on a mass basis (percentage, parts, etc.).

### [Food Composition]

A food composition according to one aspect of the present invention contains a fermented product of a plant material, and has a breaking stress of 1.00 N/m² or more at a timing when a breaking strain rate is 50% in a state of being formed into a patty shape. Such a food composition has an excellent livestock meat-like fibrous texture.

### (Plant Material)

In the present description, examples of the plant material include those containing at least one of a carbon source and a nitrogen source. Examples of the plant material include a grain-derived raw material and a fruit-derived raw material.

Examples of the grain-derived raw material include protein-derived raw materials derived from whole soybeans, defatted soybeans, soybean protein, wheat gluten, peas, broad beans, adzuki beans and the like and starch-derived raw materials derived from wheat, barley, rye, bran, rice, rice bran, corn, starch pulp and the like. The grain-derived raw material may also be bean pulp, wheat bran, beer dregs, or corn powder. The wheat bran is the outer layer part of wheat grains. The beer dregs are dregs remaining after the manufacture of beer and refer to a solid remaining after mixing and stirring crushed malt and hot water and removing wort by filtration. A kind thereof or a combination thereof can be used.

The grain-derived raw material is preferably rich in the carbon source and the nitrogen source. In particular, from the viewpoint of the dietary fiber content, the grain-derived raw material is preferably bean pulp, and more preferably a soy pulp. The soy pulp is pulp of soybeans.

### (Fermented Product)

The fermented product of a plant material is a product obtained by fermenting the plant material with microorganisms or a product obtained by fermenting the plant material with microorganisms. In the present description, examples of microorganisms include filamentous fungi including *koji* molds, lactic acid bacteria, and yeasts. In addition, in the present description, a *koji* mold fermented product of the plant material is obtained by fermenting the plant material with the *koji* mold, or obtained by fermenting the plant material with the *koji* mold.

Although the kind of the *koji* mold is not particularly limited, *koji* molds of *Aspergillus* are preferable because the *koji* molds are used for food production. Of these, *Aspergillus oryzae, Aspergillus awamori, Aspergillus inuii, Aspergillus usamii, Aspergillus saitoi* and the like are preferable.

In the case of *Aspergillus oryzae,* strain ATCC1011, strain ATCC22788, strain NISL1365, strain NISL2074, strain NISL1018, and the like are preferable, and strain ATCC1011 and strain ATCC22788 are more preferable. In the case of *Aspergillus awamori,* strain JCM22312 is preferable. In the case of *Aspergillus inuii,* strain NISL1608 is preferable. In the case of *Aspergillus usamii,* strain ATCC11364 is preferable. In the case of *Aspergillus saitoi,* strain NISL1541 is preferable.

Strain ATCC1011, strain ATCC22788, and strain ATCC11364 can be acquired from The Global Bioresource Center. Strain JCM22312 can be acquired from Riken.

Cells of a certain size are obtained by culturing using filamentous fungi such as *Aspergillus,* a fibrous texture is obtained by increasing the particle diameter of the powder, and a powder having a large particle diameter is obtained when the culture solution is dried, leading to a meat-like fibrous texture. Therefore, it is presumed that a breaking stress of a specific value is exhibited in a state where a food composition containing a fermented product of the plant material described above is formed into a patty shape. The definition of the patty shape in the present description will be described below.

The fermented product is preferably a fermented product obtained by subjecting a plant material to a fermentation treatment and then drying, and may be a fermented product obtained by subjecting a plant material to a fermentation treatment and then drying.

Examples of the drying method include a drum drying method and a freeze drying method. Details of the drying method are as described below.

### (Breaking Stress)

The breaking stress is a force applied per unit breaking area at the time of breaking, and is an index which does not depend on the dimension of the sample and by which a mechanical action applied to the sample between samples having different dimensions can be compared.

The breaking strain rate is a parameter related to the ease of cracking and fragility. In the measurement of the breaking stress, when the degree of deformation of the sample before the sample is broken by a breaking load F, that is, the height of the sample is defined as H (mm), and the distance over which a plunger has advanced is defined as ΔH (mm), the breaking strain rate is represented by ΔH/H (×100%).

In the present description, the breaking stress at a time point when a breaking strain rate is 50% (hereinafter, also simply referred to as "breaking stress") is specifically an average value of values obtained by placing a patty-shaped food composition having a product temperature of 20±5°C, a sample thickness of 1.8 cm, and an inner diameter of 7.5 cm on a measurement table as a measurement sample using a texture analyzer (EZ-SX manufactured by Shimadzu Corporation), and a wedge-shaped plunger having a lateral width of 40 mm, a longitudinal width of 112 mm, and an angle of 30 degrees, under conditions of a load cell of 50 N and a compression (measurement) speed of 1.0 mm/sec, and measuring the breaking stress at three points on a substantially central portion of an upper surface at a time point when the breaking strain rate is 50%.

In the present description, the breaking stress is a value measured in a state where the food composition is formed into a patty shape. The patty shape means, when the food composition contains only a dried product, a shape obtained by adding water to the dried product, followed by kneading, forming, and firing, and particularly means a shape obtained by forming a paste of the food composition containing a fermented product of the plant material described above into a circular shape having an inner diameter of 5 cm to 20 cm and a size having a thickness of 1 cm to 5 cm and forming the paste with a uniform thickness. The food composition according to one aspect of the present invention can be mixed with water and formed into a patty shape by the formation processing.

Examples of the state of being formed into a patty shape include a state of being formed by the following procedure. When the food composition contains only a dried product, 16.7 g of the dried product is used, and the dried product and water are mixed at a ratio of 1:2 on a mass basis, followed by kneading for 10 seconds with a kneading machine (product name "Microcomputer Food Processor SKF-H101", manufactured by Tiger Corporation). The kneaded sample is formed into a circular shape having a thickness of 1.8 cm and an inner diameter of 7.5 cm. In a frying pan was placed 5 ml of oil, and the formed sample was fired with low heat for 1 minute and 20 seconds on each side for a total of 2 minutes and 40 seconds to form a patty shape. The low heat refers to the degree of fire immediately before a tip of the fire comes into contact with a bottom of the frying pan.

The food composition according to one aspect of the present invention has a breaking stress of 1.00 N/m² or more at a time point when a breaking strain rate is 50%. The breaking stress is measured by a texture analyzer in a state of being formed into a patty shape. When the breaking stress is 1.00 N/m² or more, the food composition exhibits a high livestock meat-like fibrous texture as shown in Examples described below. In particular, the food composition according to one aspect of the present invention is not easily dissolved by chewing during eating and has a texture similar to that of livestock meat.

The breaking stress is 1.00 N/m² or more, preferably 2.00 N/m² or more, more preferably 3.00 N/m² or more, and still more preferably 5.00 N/m² or more, from the viewpoint of strength of the livestock meat-like fibrous texture.

Cells of a certain size are obtained by culturing using filamentous fungi such as *Aspergillus,* a fibrous texture is obtained by increasing the particle diameter of the powder, and a powder having a large particle diameter is obtained when the culture solution is dried, leading to a meat-like fibrous texture. Therefore, the breaking stress at a time point when a breaking strain rate is 50% can be 1.00 N/m² or more in a state where the powder is formed into a patty shape and fired.

### (Composition of Food Composition)

The food composition according to one aspect of the present invention may contain only the fermented product, and may contain plant-based protein and/or a dietary fiber in addition to the fermented product from the viewpoint of processing suitability.

Plant-based protein is protein collected from plants. Examples of the origin of the plant-based protein include wheat gluten and grains such as wheat, barley, oats, rice, and corn; soybean protein isolate, defatted soybeans, or beans such as soybeans, peas, adzuki beans, chickpeas, lentils, broad beans, and mung beans; and nuts and seeds such as almonds, peanuts, cashews, pistachios, hazelnuts, macadamia nuts, flaxseed, sesame, and rapeseed. An example of the plant-based protein may be squeezed pulp of the above plant, for example, bean pulp, particularly soy pulp.

When the food composition according to one aspect of the present invention contains water, a ratio of a mass of the fermented product to a total mass of the food composition is preferably 5% to 40%, and a ratio of a mass of the plant-based protein other than the fermented product to the total mass of the food composition is preferably 4% to 40%, and more preferably 5% to 40%, from the viewpoint of the strength of the livestock meat-like fibrous texture. When the food composition according to one aspect of the present invention contains water, a ratio of a mass of water to the total mass of the food composition is preferably 30% to 70%, and more preferably 50% to 60%.

When the food composition according to one aspect of the present invention does not contain water, the ratio of the mass of the fermented product to the total mass of the food composition is preferably 20% to 100%, and the ratio of the mass of the plant-based protein other than the fermented product to the total mass of the food composition is preferably 0% to 80%, from the viewpoint of the strength of the livestock meat-like fibrous texture.

The dietary fiber may be either a water-soluble dietary fiber or an insoluble dietary fiber. Examples of the water-soluble dietary fiber in the present invention include at least one selected from the group consisting of soybean dietary fiber, polydextrose, indigestible dextrin, galactomannan, inulin, partially hydrolyzed guar gum, pectin, and gum arabic. The insoluble dietary fiber is an edible fiber that is insoluble in water, and examples thereof include at least one selected from the group consisting of cellulose, wheat fiber, oat fiber, citrus fiber, soybean fiber, pea fiber, and mung bean fiber. A mass of the dietary fiber is preferably 20% to 50% with respect to the total mass of the food composition according to one aspect of the present invention, from the viewpoint of the strength of the livestock meat-like fibrous texture.

The food composition according to one aspect of the present invention preferably does not contain meat. Even when the food composition according to one aspect of the present invention does not contain meat, the food composition has a livestock meat-like fibrous texture and can be used as a substitute for livestock meat.

The raw material composition used for the textured processed soybean product of the present embodiment may contain, in addition to the fermented product, the plant-based protein, and the dietary fiber described above, seasonings such as salt, animal-based or plant-based oils and fats, fragrances, and various additives for the purpose of improving the fluidity of raw materials, reducing soybean odor, or improving taste, as long as the effects of the present invention are not affected.

### (Particle Diameter)

In a sieving test using the food composition according to one aspect of the present invention, a ratio of a mass of particles having a particle diameter of 1,000 µm or more and less than 4,500 µm to the total mass of the food composition is preferably 5% or more. Examples of the method of the sieving test include a method described in Examples described below.

When a ratio of a mass of particles having a particle diameter of 1,000 µm or more and less than 4,500 µm to the total mass of the food composition is 5% or more, the food composition exhibits a high livestock meat-like fibrous texture as shown in Examples described below.

The ratio of the mass of the particles having a particle diameter of 1,000 µm or more and less than 4,500 µm to the total mass of the food composition is more preferably 10% to 80%, and still more preferably 20% to 50%, from the viewpoint of the livestock meat-like fibrous texture.

A ratio of a mass of particles having a particle diameter of 1,000 µm or more and less than 3,350 µm to the total mass of the food composition is more preferably 5% or more, still more preferably 10% to 80%, and particularly preferably 20% to 50%, from the viewpoint of the livestock meat-like fibrous texture. In addition, a ratio of a mass of particles having a particle diameter of 1,000 µm or more and less than 2,800 µm to the total mass of the food composition is more preferably 5% or more, still more preferably 10% to 80%, and particularly preferably 20% to 50%.

The content of particles having the above particle diameter can be adjusted as described above by fermenting and preferably drying the grain-derived raw material.

### (Other Features)

The food composition according to one aspect of the present invention can be used as a substitute for livestock meat. The food composition according to one aspect of the present invention is preferably a livestock meat-like food composition. The livestock meat means meat from livestock (pigs, cows, sheep, goats, horses, and the like), poultry (chickens, quails, domestic ducks, ducks, crossbreed ducks, geese, turkeys, and the like), and wildlife such as deer and boar. The definition of livestock meat includes, in addition to so-called meat (muscle), tissues generally used for processed livestock meat foods, such as skin, fat, tendons, cartilage, internal organs, and blood.

The food composition according to one aspect of the present invention can be processed into minced meat, a patty, a hamburger steak, surimi, ham, and the like using a food processor or a mincer.

The food composition according to one aspect of the present invention may be subjected to a cutting process such as chopping or cutting into large pieces in advance. Moreover, by adding and kneading the food composition according to one aspect of the present invention into a mixture of a plant food material and another food material such as vegetable which has been subjected to a cutting process and then subjecting the kneaded mixture to cooking, a cooked material having a meat-like flavor in the form of fried chicken, *Shigureni* (food boiled down in soy sauce and ginger), hamburger steaks, meatballs, meatloaf, *Menchi-katsu* (fried cutlet of minced meat), gyoza, shumai, wontons, spring rolls, steamed pork buns or the like is obtained. In this regard, meat may be added as another food material. The cooked material is not limited to those listed above, and examples thereof include a cooked material generally using soy sauce as a seasoning component and the like.

### [Method for Producing Food Composition]

A method for producing a food composition according to one aspect of the present invention includes fermenting a plant material with microorganisms.

Examples of the plant material include those described above.

### <Treatment with Enzymes>

In the production method according to the present embodiment, the plant material may be treated with arabinase and cellulase before the plant material is fermented with microorganisms. By treating the plant material with arabinase and cellulase, the content of vitamin B increases. Although the reason is not clear, speculated causes are high expression of a gene related to the metabolism of vitamin B due to a change in the balance of saccharides that the microorganism can assimilate, an increase in the amount of the primary metabolite as the substrate of vitamin B and the like.

The cellulase is specifically a hemicellulase, a glucanase, a glucosidase or the like, and examples of the hemicellulase include xylanase and the like.

Before the treatment with arabinase and cellulase is performed, the plant material may be subjected to a heating and pressurizing process. The heating and pressurizing process is preferably performed using an autoclave, an extruder, or a high-pressure heating tube reactor. By such a heating and pressurizing process, the enzymes can efficiently act on the plant material.

In the production method of this embodiment, the ratio of arabinase and cellulase for treating the plant material is preferably 1:3 to 9:1, further preferably 1:3 to 3:1, on enzyme unit (also referred to as "unit" or "U" below) basis. When a ratio between arabinase and cellulase is (1 or more):3 on a unit basis, there is an advantage that the amount of vitamin B further increases.

In the production method of the present embodiment, it is more preferable to treat 1 g of the plant material with 4 U or more arabinase and 0.94 U or more cellulase, and it is more preferable to treat 1 g of the plant material with 4 U or more arabinase and 1.6 U or more cellulase. The concentration of arabinase and the concentration of cellulase per 1 g of the plant material are further preferably 4 to 15 U and 10 to 12.5 U, respectively. When the concentration of arabinase and the concentration of cellulase per 1 g of the plant material are 4 U or more and 0.94 U or more, respectively, there is an advantage that the raw material is decomposed sufficiently and the vitamin B amount increases. When the concentrations are 15 U or less and 12.5 U or less, respectively, there is an advantage that the costs used in the production can be reduced.

Moreover, arabinase and cellulase in the medium substrate containing the plant material are preferably at 250 to 900 mU/ml and 100 to 750 mU/ml, respectively.

The temperature, the pH, the treatment time, and the like of the treatment of the plant material with arabinase and cellulase can be appropriately determined in consideration of the concentrations of arabinase and cellulase and the like. The temperature is preferably 0°C to 80°C, more preferably 20°C to 70°C, still more preferably 30°C to 60°C. Temperature in the range has an advantage because the enzymes exhibit high activities and because the raw material is decomposed efficiently. The pH is preferably 2 to 8, more preferably 3 to 7, further preferably 4 to 6. When the pH is in the range, there is an advantage that the enzymes exhibit high activities and that the raw material is decomposed efficiently. The treatment time is preferably 1 hour to 72 hours, more preferably 1 hour to 24 hours, and still more preferably 1 hour to 20 hours. When the treatment time is 72 hours or shorter, there is an advantage that the production period can be shortened. Moreover, when the treatment time is 1 hour or longer, there is an advantage that the raw material can be decomposed sufficiently. During the treatment of the plant material with arabinase and cellulase, the raw material and the enzymes are preferably stirred because the hydrolysis is promoted due to an increase in the contact faces of the raw material and the enzymes, for example.

When the plant material is treated with arabinase and cellulase, the order of treatment may be any order. The plant material which has been treated with arabinase may be treated with cellulase, or the plant material which has been treated with cellulase may be treated with arabinase. Alternatively, both arabinase and cellulase may be added to the plant material to simultaneously perform the enzyme treatment.

The amount of arabinan contained in the plant material which has been treated with arabinase and cellulase is decreased preferably by 80 mass% or more, and more preferably by 90 mass% or more, from the amount of arabinan in the plant material before the treatment with arabinase and cellulase. When the amount of arabinan contained in the plant material which has been treated with arabinase and cellulase is decreased by 80 mass% or more from the amount of arabinan in the plant material before the treatment with arabinase and cellulase, there is an advantage that the amount of arabinose in the medium increases and that the amount of vitamin B increases due to a change in the balance of saccharides that the *koji* mold can assimilate.

### <Fermentation Using Microorganism>

A method for producing a food composition according to one aspect of the present invention includes fermenting a plant material with microorganisms. Before fermenting the plant material with the microorganisms, a carbon source or a nitrogen source other than the plant material, metal ions, or an antifoaming agent for eliminating bubbles is added in the middle of culture in order to set conditions for actively growing microorganisms. The pH may be adjusted to pH 3 to 7.

The types of microorganisms are as described above.

The spores of the microorganism are preferably added to reach 1×10⁴ spores or more per gram of the plant material, and more preferably added to reach 1×10⁶ to 1×10⁸ spores per gram of the plant material.

The plant material may be put into a container which can prevent contamination with harmful microorganisms, and fermentation by microorganisms may be performed in the container. Here, the container which can prevent contamination with harmful microorganisms may be a container having a structure which can disconnect the inside of the container and the external atmosphere. A sterilized polypropylene jar, a glass medium bottle, or the like can be used for experimental application, and a jar fermenter, a pressure type fermentation tank, or the like, which has a function capable of supplying sterile air into the container can be used for industrial application. Moreover, a filter which can collect 99.97% or more of dust of 0.3 µm or more, such as a HEPA filter, can be used to sterilize the air. Moreover, it is preferable to perform stirring during the fermentation with the microorganism.

The fermentation may be performed at 10°C to 40°C, preferably at 25°C to 37°C, for 1 day to 5 days, preferably for 2 days and 3 days. When the fermentation temperature is in the range, there is an advantage that the microorganism grows actively. Moreover, fermentation time of five days or less has an advantage because the cost of fermentation and the environmental burden are reduced. Moreover, when the fermentation time is 1 day or longer, there is an advantage that the microorganism grows sufficiently.

### <Drying>

In the production method according to one aspect of the present invention, as a post-treatment, treatments such as a pulverization treatment, a sterilization treatment, a disinfection treatment, a concentration treatment, a membrane separation treatment, and a drying treatment may be performed, and the drying treatment is preferably performed. Examples of the drying treatment include methods such as freeze drying, vacuum drying, and heat drying, and drum drying or freeze drying is preferable from the viewpoint of the particle diameter of the dried product.

Drum drying refers to a method in which a liquid fermented product is caused to flow on a high-temperature drum roll to perform gelatinization and drying at once, and a film of the fermented product formed on the drum roll is scraped off and pulverized with a scraper knife. The dryer and the drum dryer used for the drum dryer are not particularly limited, and a single drum dryer, a double drum dryer, a twin drum dryer, a vacuum drum dryer, and the like can be used. In the drum drying, drying is preferably performed at 140°C to 160°C for 1 minute to 2 minutes.

Freeze drying is a method of drying a frozen fermented product in a vacuum state at a low temperature. In the freeze drying, drying is preferably performed at -40°C to -30°C for 20 hours to 40 hours in accordance with the set temperature of the machine.

The post-treatment may be performed at any stage. Moreover, the post-treatment may be a single treatment or a combination of treatments.

As described above, the following matters are disclosed in the present description.
<1> A food composition containing:
   a fermented product of a plant material,
   in which a breaking stress at a time point when a breaking strain rate is 50% is 1.00 N/m² or more in a state of being formed into a patty shape.
<2> The food composition according to <1> above, in which the plant material is a grain-derived raw material.
<3> The food composition according to <1> or <2> above, in which the fermented product is a fermented product of a *koji* mold.
<4> The food composition according to any one of <1> to <3> above, in which, in a sieving test using the food composition, a ratio of a mass of particles having a particle diameter of 1,000 µm or more and less than 4,500 µm to a total mass of the food composition is 5% or more.
<5> The food composition according to any one of <1> to <4> above,
   in which the food composition contains water,
   a ratio of a mass of the fermented product to the total mass of the food composition is 5% to 40%, and a ratio of a mass of plant-based protein other than the fermented product to the total mass of the food composition is 4% to 40%.
<6> The food composition according to any one of <1> to <4> above,
   in which the food composition does not contain water,
   a ratio of a mass of the fermented product to the total mass of the food composition is 20% to 100%, and a ratio of a mass of plant-based protein other than the fermented product to the total mass of the food composition is 0% to 80%.
<7> The food composition according to any one of <1> to <6> above, in which the fermented product is a fermented product obtained by subjecting the plant material to a fermentation treatment and then performing drying.
<8> A method for producing a food composition, the method including:
   fermenting a plant material with a microorganism,
   in which the obtained food composition is the food composition according to any one of <1> to <7> above.
<9> The method for producing a food composition according to <8>, further including:
   drying a resultant obtained by fermenting the plant material with the microorganism.

### Examples

The present invention is described specifically below with reference to Examples, but the present invention is not limited to the Examples below unless it does not go beyond the gist thereof.

First, prior to the Examples, the materials shown below were prepared.

### (Soy Pulp Powder)

The soy pulp powder was obtained by drying the pressed cake of soymilk discharged in the process of producing soymilk, and a powder "Kikkoman Soy Milk soy pulp Powder" was used from dried soy pulp manufactured by Kikkoman Corporation.

### (Enzymes)

As the arabinase, "PECLYVE FILTRATION" (manufactured by Soufflet biotechnologies) was used, and as the cellulase "CELLULYVE 50L" (manufactured by Soufflet biotechnologies) was used.

### (Others)

As the reagents, commercial guaranteed reagents were used.

### [Test Example 1]

### <Preparation Example 1: Preparation of Fermented Product of Plant Material>

### [Preparation of Drum-Dried Fermented Soy Pulp and Freeze-Dried Fermented Soy Pulp]

The fermentation was performed with a 300 L jar (manufactured by B.E. Marubishi Co., Ltd.). Water was added to 18 kg of the soy pulp powder to dilute the soy pulp powder to 170 L, and 27 g of Shin-Etsu Silicone (registered trademark) KM72F (manufactured by Shin-Etsu Chemical Co., Ltd.) as an antifoaming agent was added thereto, followed by sterilization at 123°C for 60 minutes. An enzyme solution filtered through a filter having a pore size of 0.22 µm was added such that a final concentration of arabinase was 0.6 U/ml and a final concentration of cellulase was 0.1 U/ml, followed by stirring at 60°C for 2 hours. After the reaction, the mixture was cooled to 30°C.

Pre-culture was performed as follows. To each of six 500 ml baffled Erlenmeyer flasks were added 5 g of soy pulp powder and 100 ml of water, followed by autoclaving (121°C, 30 minutes). *Strain Aspergillus oryzae* NISL1365 (glycerol stock), which is a seed fungus, was added in an amount of 0.5 ml each, and was inoculated such that the number of initial spores in the pre-culture solution was 5×10⁵/ml. This pre-culture solution was subjected to shaking culture (30°C, 160 rpm) for 24 hours. Thereafter, the pre-culture solution was inoculated into a 300 L jar and cultured at 30°C for 3 days. The aeration speed and stirring speed were 0.5 vvm and 100 rpm at the start, and increased to 1 vvm and 150 rpm after 18 hours. After the culture, the fermented product was sterilized by heating (80°C, 30 minutes).

The fermented product subjected to the heat sterilization treatment was dried for 1 minute with a drum dryer (product name: "Drum Dryer D-00", manufactured by Katsuragi Industry Co., Ltd.) set to a gap of 0.3 mm and a surface temperature of 150°C. In this way, the fermented soy pulp dried in a drum dryer is also called drum-dried fermented soy pulp.

Using a freeze-drying device (product name: "freeze-drying machine, for test and research, RL-B10", manufactured by Kyowa Vacuum Co., Ltd.), the fermented product subjected to the heat sterilization treatment was pre-frozen at -40°C and then dried by performing sublimation and decompression treatment to 25°C. In this way, the product obtained by drying the fermented soy pulp by freeze drying is also referred to as freeze-dried fermented soy pulp.

### [Patty Shape Forming Step of Soy Pulp Powder, Drum-dried Fermented Soy Pulp, and Freeze-Dried Fermented Soy Pulp]

Using 16.7 g of each dried product of the soy pulp powder, the drum-dried fermented soy pulp, and the freeze-dried fermented soy pulp obtained in the procedure described above, the dried product and water are mixed at a ratio of 1:2 on a weight basis, followed by kneading for 10 seconds with a kneading machine (product name "Microcomputer Food Processor SKF-H101", manufactured by Tiger Corporation). Thereafter, the kneaded sample was formed into a circular shape having a thickness of 1.8 cm and an inner diameter of 7.5 cm. In a frying pan was placed 5 ml of oil, and the formed sample was fired with low heat for 1 minute and 20 seconds on each side for a total of 2 minutes and 40 seconds.

At this time, the drum-dried fermented soy pulp and the freeze-dried fermented soy pulp were able to be formed into a patty shape. On the other hand, the soy pulp powder did not solidify and was not able to be formed into a patty shape.

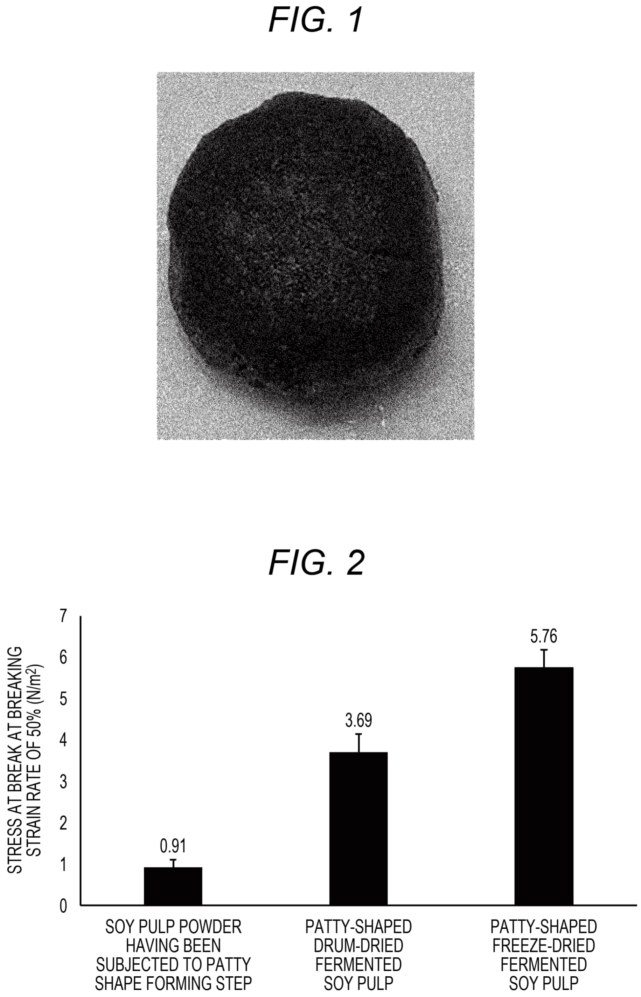

In the present description, the soy pulp powder that has been subjected to the patty shape forming step but has not become a patty shape, the drum-dried fermented soy pulp that has formed into a patty shape, and the freeze-dried fermented soy pulp that has formed into a patty shape are also referred to as the soy pulp powder having been subjected to the patty shape forming step, the patty-shaped drum-dried fermented soy pulp, and the patty-shaped freeze-dried fermented soy pulp, respectively. FIG. 1 shows a photograph of a patty-shaped drum-dried fermented soy pulp.

### <Example 1-1: Evaluation of Breaking Stress>

Using the soy pulp powder having been subjected to the patty shape forming step, the patty-shaped drum-dried fermented soy pulp, and the patty-shaped freeze-dried fermented soy pulp as measurement samples, respectively, using a texture analyzer (EZ-SX, manufactured by Shimadzu Corporation) and a wedge plunger having a lateral width of 40 mm, a longitudinal width of 112 mm, and an angle of 30 degrees, under conditions of a load cell of 50 N and a compression (measurement) speed of 1 mm/sec, the formed sample described above, which had a product temperature of 20±5°C, was placed on a measurement table, and an average value of values obtained by measuring breaking stress at three points on a substantially central portion of an upper surface at a time point when the breaking strain rate is 50% was determined. The results are shown in FIG. 2. In FIG. 2, an error bar indicates a standard deviation.

As compared with the soy pulp powder having subjected to the patty shape forming step, the patty-shaped drum-dried fermented soy pulp and the patty-shaped freeze-dried fermented soy pulp exhibited a high breaking stress, that is, a breaking stress of 1.00 N/m² or more at a time point when a breaking strain rate is 50%.

### <Example 1-2: Evaluation of Livestock Meat-like Fibrous Texture>

Sensory evaluation was performed using the soy pulp powder having subjected to the patty shape forming step, the patty-shaped drum-dried fermented soy pulp, and the patty-shaped freeze-dried fermented soy pulp. The following two types of sensory evaluations were performed by six or more panelists having identification ability.

### (Livestock Meat-like Fibrous Texture)

The livestock meat-like fibrous texture of each sample was evaluated in seven stages as follows, and an average value thereof was calculated. The results are shown in Table 1.
- 7 points: the livestock meat-like fibrous texture is very strong
- 6 points: the livestock meat-like fibrous texture is strong
- 5 points: the livestock meat-like fibrous texture is slightly strong
- 4 points: normal
- 3 points: the livestock meat-like fibrous texture is slightly weak
- 2 points: the livestock meat-like fibrous texture is weak
- 1 point: the livestock meat-like fibrous texture is very weak

### (Overall Evaluation)

The patty-shaped drum-dried fermented soy pulp and the patty-shaped freeze-dried fermented soy pulp were evaluated in seven stages as follows based on the soy pulp powder having been subjected to the patty shape forming step, from the viewpoint of whether they are comprehensively excellent as livestock meat-like products, and an average value thereof was calculated. The results are shown in Table 1.
- 7 points: considerably higher than the soy pulp powder having been subjected to patty shape forming step
- 6 points: higher than the soy pulp powder having been subjected to patty shape forming step
- 5 points: slightly higher than the soy pulp powder having been subjected to patty shape forming step
- 4 points: equivalent to the soy pulp powder having been subjected to patty shape forming step
- 3 points: slightly lower than the soy pulp powder having been subjected to patty shape forming step
- 2 points: lower than the soy pulp powder having been subjected to patty shape forming step
- 1 point: considerably lower than the soy pulp powder having been subjected to patty shape forming step

**[Table 1]**

| | Fibrous texture | Overall evaluation |
|---|---|---|
| Soy pulp powder having been subjected to patty shape forming step | 2 | 4 |
| Patty-shaped freeze-dried fermented soy pulp | 4 | 4.875 |
| Patty-shaped drum-dried fermented soy pulp | 5.5 | 6.375 |

From the results shown in Table 1, as compared with the soy pulp powder having been subjected to patty shape forming step, the patty-shaped freeze-dried fermented soy pulp and the patty-shaped drum-dried fermented soy pulp had higher livestock meat-like fibrous texture and were also higher in the overall evaluation as the livestock meat-like products.

From the results of Examples 1-1 and 1-2, it was found that, in a state of being formed into a patty shape, a product obtained by drying the fermented soy pulp, which was obtained by using *Aspergillus oryzae,* by freeze drying and a product obtained by drying the fermented soy pulp by drum drying, which had a breaking stress of 1.00 N/m² or more at a time point when the breaking strain rate is 50%, had a strong livestock meat-like fibrous texture and a high overall evaluation as a livestock meat product.

### <Example 1-3: Measurement of Particle Size Distribution>

A particle size distribution of each of the soy pulp powder, the drum-dried fermented soy pulp, and the freeze-dried fermented soy pulp, which had not been subjected to the patty shape forming step, was measured by a sieving test. The sieving test was performed in an order of the following steps (1) to (4).
(1) Each sample was weighed in an amount of 350 g.
(2) A mesh was attached to a shaker.
(3) The shaking at 2000 rpm for 1 minute was repeated twice.
(4) The weight of the sample remaining in the mesh was measured.

The steps (1) to (4) were repeated five times. An average value of the weights measured in (4) was divided by 350 g to calculate a ratio of each particle diameter in the entire sample.

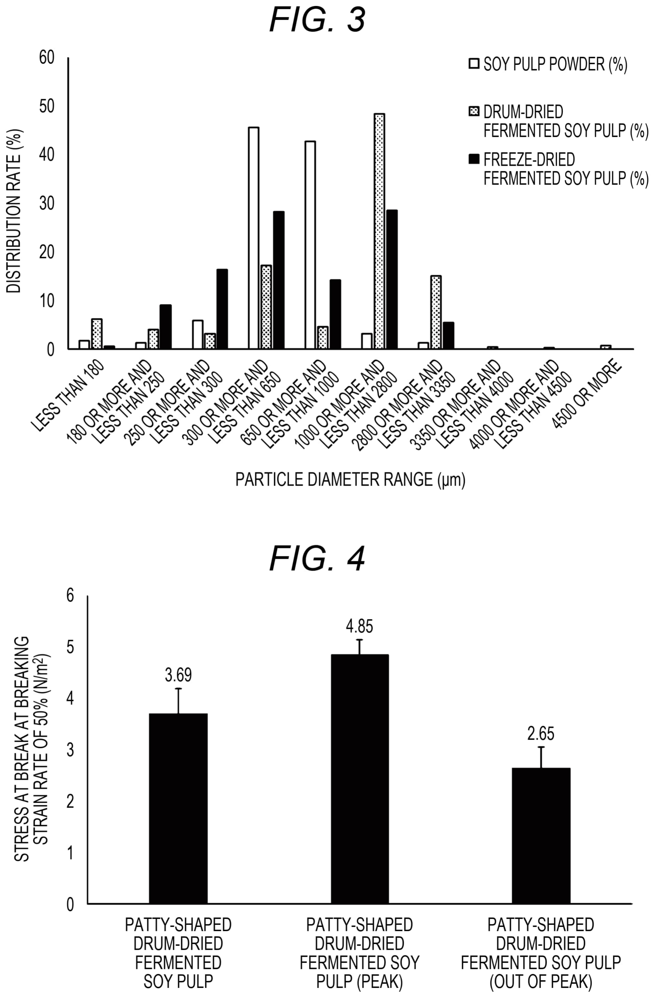

The No. of the used mesh and the particle size distribution are shown in Table 3. In addition, the particle size distribution is shown in FIG. 3. For example, the particle diameter range of the particles remaining without passing through the mesh No. 4 was less than 4500 µm.

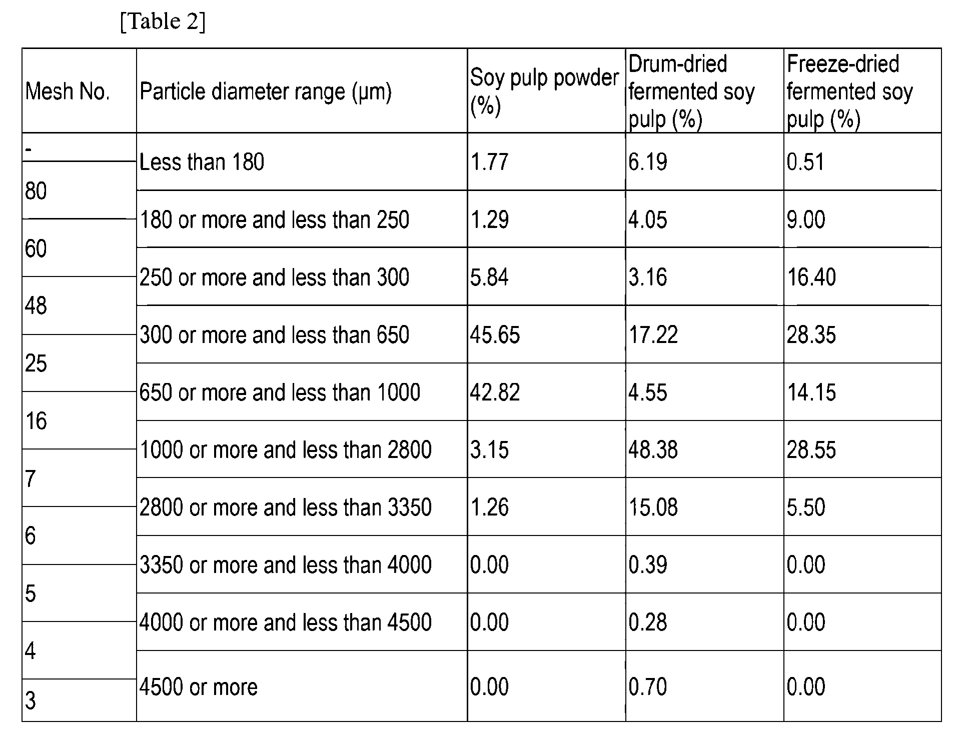

In the case of the drum-dried fermented soy pulp and the freeze-dried fermented soy pulp, particles having a particle diameter in a range of 1,000 µm or more and less than 2,800 µm occupy the highest ratio. Hereinafter, the range of 1,000 µm or more and less than 2,800 µm is also referred to as a peak.

### <Example 1-4: Evaluation of Breaking Stress>

Among drum-dried fermented soy pulps, a drum-dried fermented soy pulp (peak) made of only particles having a particle diameter in the peak was prepared. In addition, among the drum-dried fermented soy pulps, a drum-dried fermented soy pulp (out of the peak) made of only particles having a particle diameter out of the peak was prepared.

The drum-dried fermented soy pulp, the drum-dried fermented soy pulp (peak), and the drum-dried fermented soy pulp (out of the peak) were used and formed into a patty shape in the same procedure as [Patty Shape Forming Step of Soy Pulp Powder, Drum-dried Fermented Soy Pulp, and Freeze-Dried Fermented Soy Pulp] described above, and the patty-shaped drum-dried fermented soy pulp, the patty-shaped drum-dried fermented soy pulp (peak), and the patty-shaped drum-dried fermented soy pulp (out of the peak) were prepared.

The breaking stress of the three types of samples was measured in the same manner as in Example 1. The results are shown in FIG. 4. In FIG. 4, an error bar indicates a standard deviation.

The breaking stress was increased in the order of the patty-shaped drum-dried fermented soy pulp (peak), the patty-shaped drum-dried fermented soy pulp, and the patty-shaped drum-dried fermented soy pulp (out of the peak). It was found that the breaking stress tends to increase as the content of the particles having the particle diameter in the peak in the sample increases.

### <Example 1-5: Evaluation of Livestock Meat-like Fibrous Texture>

Sensory evaluation was performed in the same manner as in the case of the livestock meat-like fibrous texture of Example 2, using the soy pulp powder having subjected to the patty shape forming step, and the patty-shaped drum-dried fermented soy pulp, the patty-shaped drum-dried fermented soy pulp (peak), and the patty-shaped drum-dried fermented soy pulp (out of the peak), which were prepared in Example 4. The results are shown in Table 3.

| | Fibrous texture |
|---|---|
| Soy pulp powder having been subjected to patty shape forming step | 2 |
| Patty-shaped drum-dried fermented soy pulp powder (other than peak) | 3.8 |
| Patty-shaped drum-dried fermented soy pulp powder | 5.5 |
| Patty-shaped drum-dried fermented soy pulp powder (peak) | 6.2 |

In the case of the patty-shaped drum-dried fermented soy pulp powder, it was found that the livestock meat-like fibrous texture tends to be stronger as the content of particles having a particle diameter in the peak in the sample is increased.

From Examples 4 and 5, it was found that the breaking stress tends to be higher and the livestock meat-like fibrous texture tends to be stronger as the content of particles having a particle diameter in the peak in the sample is increased. That is, a correlation was observed between the height of the breaking stress and the strength of the livestock meat-like fibrous texture.

### [Test Examples 2]

### <Preparation Example 2: Preparation of Fermented Product of Plant Material>

The fermentation was performed with a 30 L jar (manufactured by B.E. Marubishi Co., Ltd.). Water was added to 1.5 kg of the soy pulp powder to dilute the soy pulp powder to 15 L, and 2.25 g of Shin-Etsu Silicone (registered trademark) KM72F (manufactured by Shin-Etsu Chemical Co., Ltd.) as an antifoaming agent was added thereto, followed by sterilization at 123°C for 60 minutes. An enzyme solution filtered through a filter having a pore size of 0.22 µm was added such that a final concentration of arabinase was 0.6 U/ml and a final concentration of cellulase was 0.1 U/ml, followed by stirring at 60°C for 2 hours. After the reaction, the mixture was cooled to 30°C.

Pre-culture was performed as follows. For each strain, 5 g of soy pulp powder and 100 ml of water were added to a 500 ml baffled Erlenmeyer flask, followed by autoclaving (121°C, 30 minutes). The strain ATCC22788 and the strain ATCC1011 were used as the seed *koji.* Strain *glycerol stock,* which is a seed fungus, was added in an amount of 0.5 ml to 1 ml, and inoculated so that the number of initial spores in the preculture solution was 5×10⁵/ml. This pre-culture solution was subjected to shaking culture (30°C, 160 rpm) for 24 hours. Thereafter, the pre-culture solution was inoculated into a 300 L jar and cultured at 30°C for 3 days. The aeration speed and stirring speed were 0.5 vvm and 250 rpm at the start, and increased to 1 vvm and 330 rpm after 18 hours. After the culture, the fermented product was sterilized by heating (80°C, 30 minutes).

The fermented product subjected to the heat sterilization treatment was dried for 1 minute with a drum dryer (product name: "Drum Dryer D-00", manufactured by Katsuragi Industry Co., Ltd.) set to a gap of 0.3 mm and a surface temperature of 150°C.

Thereafter, patty shape formation was performed in the same procedure as [Patty Shape Forming Step of Soy Pulp Powder, Drum-dried Fermented Soy Pulp, and Freeze-Dried Fermented Soy Pulp] of Preparation Example 1.

In the present description, the fermented drum-dried fermented soy pulps produced using *Aspergillus oryzae* strain ATCC22788 and strain ATCC1011 are also referred to as "drum-dried fermented soy pulp (strain ATCC22788)" and "drum-dried fermented soy pulp (strain ATCC1011)", respectively. In addition, the drum-dried fermented soy pulp formed into a patty shape (strain ATCC22788) and the drum-dried fermented soy pulp formed into a patty shape (strain ATCC1011) are also referred to as "patty-shaped drum-dried fermented soy pulp (strain ATCC22788)" and "patty-shaped drum-dried fermented soy pulp (strain ATCC1011)", respectively.

As described in Preparation Example 1, in the present description, the drum-dried fermented soy pulp and the patty-shaped drum-dried fermented soy pulp produced using *Aspergillus oryzae* strain NISL1365 are also simply referred to as "drum-dried fermented soy pulp" and "patty-shaped drum-dried fermented soy pulp", respectively.

### <Example 2-1: Evaluation of Breaking Stress>

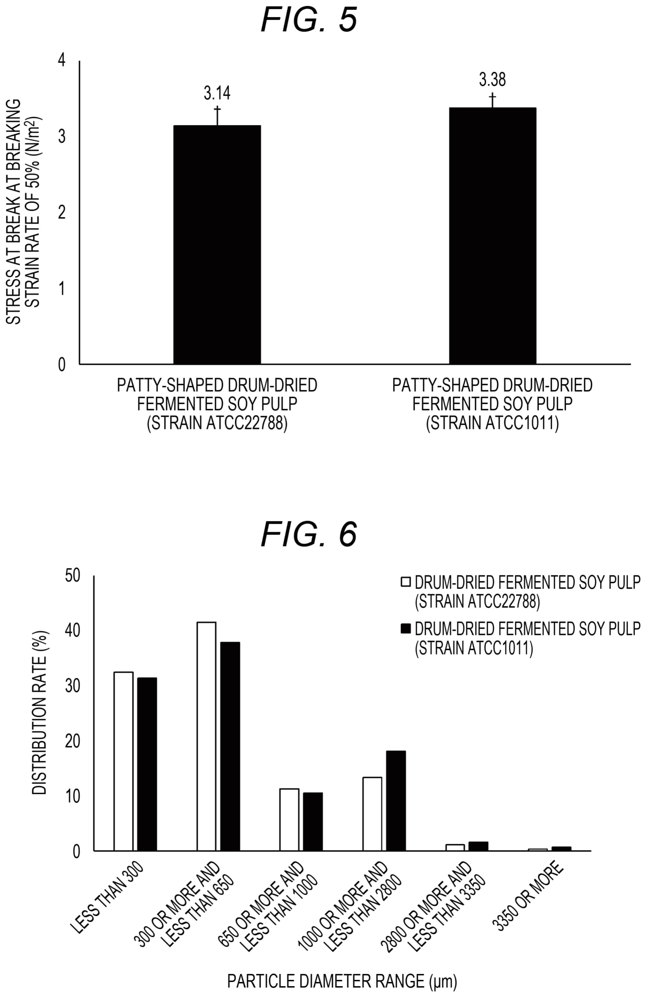

An average value of values obtained by measuring the breaking stress at three points was determined in the same manner as in Example 1-1, except that the patty-shaped drum-dried fermented soy pulp (strain ATCC22788) and the patty-shaped drum-dried fermented soy pulp (strain ATCC1011) were used instead of the soy pulp powder having subjected to the patty shape forming step, the patty-shaped drum-dried fermented soy pulp, and the patty-shaped freeze-dried fermented soy pulp in Example 1-1. The results are shown in FIG. 5. In FIG. 5, an error bar indicates a standard deviation.

Both the patty-shaped drum-dried fermented soy pulp (strain ATCC22788) and the patty-shaped drum-dried fermented soy pulp (strain ATCC1011) had a breaking stress of 1.00 N/m² or more at a time point when the breaking strain rate is 50%.

### <Example 2-2: Evaluation of Livestock Meat-like Fibrous Texture>

The livestock meat-like fibrous texture was evaluated in the same manner as in Example 1-2, except that the soy pulp powder having subjected to the patty shape forming step, the patty-shaped drum-dried fermented soy pulp (strain ATCC22788), and the patty-shaped drum-dried fermented soy pulp (strain ATCC 1011) were used instead of the soy pulp powder having subjected to the patty shape forming step, the patty-shaped drum-dried fermented soy pulp, and the patty-shaped freeze-dried fermented soy pulp in Example 1-2. The results are shown in Table 4.

**[Table 4]**

| | Fibrous texture |
|---|---|
| Soy pulp powder having been subjected to patty shape forming step | 2 |
| Patty-shaped drum-dried fermented soy pulp (strain ATCC22788) | 4.7 |
| Patty-shaped drum-dried fermented soy pulp (strain ATCC1011) | 5 |

From Table 4, the patty-shaped drum-dried fermented soy pulp (strain ATCC22788) and the patty-shaped drum-dried fermented soy pulp (strain ATCC 1011) had a higher livestock meat-like fibrous texture than the soy pulp powder having subjected to the patty shape forming step.

### <Example 2-3: Measurement of Particle Size Distribution>

A measurement was performed in the same procedure as in Example 1-3 except that the drum-dried fermented soy pulp (strain ATCC22788) and the drum-dried fermented soy pulp (strain ATCC1011), which had not subjected to the patty shape forming step, were used instead of the soy pulp powder, the drum-dried fermented soy pulp, and the freeze-dried fermented soy pulp, which had not subjected to the patty shape forming step, in Example 1-3, and the No. of the used mesh is different. In this way, a particle size distribution of the drum-dried fermented soy pulp (strain ATCC22788) and the drum-dried fermented soy pulp (strain ATCC1011), which had not subjected to the patty shape forming step, was measured by the sieving test.

The No. of the used mesh and the particle size distribution are shown in Table 5. In addition, the particle size distribution is shown in FIG. 6.

**[Table 5]**

| Mesh No. | Particle diameter range (µm) | Drum-dried fermented soy pulp (strain ATCC22788) (%) | Drum-dried fermented soy pulp (strain ATCC1011) (%) |
|---|---|---|---|
| - | Less than 300 | 32.40 | 31.33 |
| 48 | | | |
| | 300 or more and less than 650 | 41.46 | 37.78 |
| 25 | | | |
| | 650 or more and less than 1000 | 11.30 | 10.52 |
| 16 | | | |
| | 1000 or more and less than 2800 | 13.33 | 18.09 |
| 7 | | | |
| | 2800 or more and less than 3350 | 1.15 | 1.61 |
| 6 | | | |
| | 3350 or more | 0.37 | 0.69 |

It was found that a ratio of particles having a particle diameter of 1,000 µm or more was high in the drum-dried fermented soy pulp (strain ATCC22788) and the drum-dried fermented soy pulp (strain ATCC1011).

### [Test Examples 3]

### <Preparation Example 3: Preparation of Fermented Product of Plant Material>

A composition containing dry soy pulp powder "Kikkoman soy milk soy pulp powder" manufactured by Kikkoman Soy Foods Co., Ltd. as a soy pulp powder, "drum-dried fermented soy pulp" produced in Preparation Example 1 as a fermented soy pulp, and water was prepared. Specifically, in the test group No. 1, the composition after mixing was taken as 100 mass%, and mixing was performed such that the content of the dry soy pulp powder was 4.3 mass%, the content of the fermented soy pulp was 38.7 mass%, and the content of water was 57.0 mass%. Test groups No. 2 to No. 5 were also mixed at the ratios shown in Table 6. The obtained composition was homogenized and then placed in a food processor.

**[Table 6]**

| Test group No. | Ratio of soy pulp powder (mass%) | Ratio of fermented soy pulp (mass%) | Ratio of water (mass%) |
|---|---|---|---|
| 1 | 4.3 | 38.7 | 57.0 |
| 2 | 12.9 | 30.1 | 57.0 |
| 3 | 21.5 | 21.5 | 57.0 |
| 4 | 30.1 | 12.9 | 57.0 |
| 5 | 38.7 | 4.3 | 57.0 |

The compositions of test groups No. 1 to No. 5 obtained as described above were kneaded for 10 seconds with a kneader (product name "Microcomputer Food Processor SKF-H101", manufactured by Tiger Corporation). Thereafter, the kneaded sample was formed into a circular shape having a thickness of 1.8 cm and an inner diameter of 7.5 cm. In a frying pan was placed 5 ml of oil, and the formed sample was fired with low heat for 1 minute and 20 seconds on each side for a total of 2 minutes and 40 seconds.

### <Example 3-1: Evaluation of Breaking Stress>

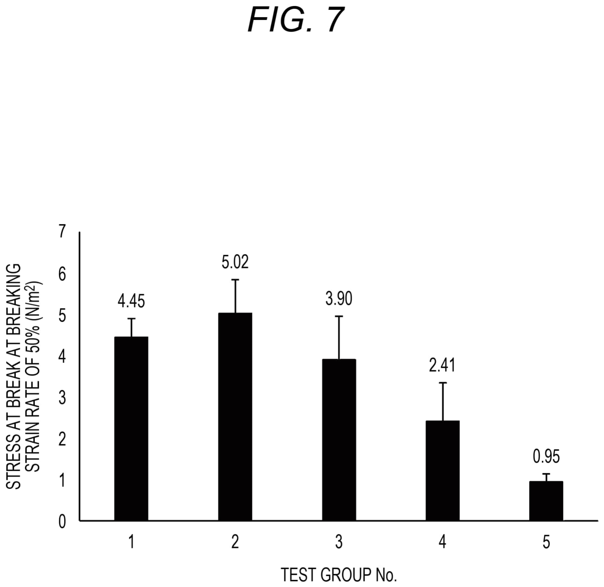

An average value of values obtained by measuring the breaking stress at three points was determined in the same manner as in Example 1-1 except that the patties obtained using test groups No. 1 to No. 5 were used instead of the soy pulp powder having subjected to the patty shape forming step, the patty-shaped drum-dried fermented soy pulp, and the patty-shaped freeze-dried fermented soy pulp in Example 1-1. The results are shown in FIG. 7. In FIG. 7, an error bar indicates a standard deviation.

The patties of test groups No. 1 to No. 5 each had a breaking stress of 1.00 N/m² or more at a time point when the breaking strain rate is 50%.

### <Example 3-2: Evaluation of Livestock Meat-like Fibrous Texture>

An evaluation of the livestock meat-like fibrous texture and an overall evaluation were performed in the same manner as in Example 1-2 except that the patties of No. 1 to No. 5 were used instead of the soy pulp powder having subjected to the patty shape forming step, the patty-shaped drum-dried fermented soy pulp, and the patty-shaped freeze-dried fermented soy pulp in Example 1-2. The results are shown in Table 7.

**[Table 7]**

| Test group/soy pulp powder | Fibrous texture | Overall evaluation |
|---|---|---|
| Soy pulp powder having been subjected to patty shape forming step | 2 | 4 |
| 1 | 5.7 | 6.0 |
| 2 | 4.5 | 5.0 |
| 3 | 3.7 | 4.8 |
| 4 | 2.8 | 4.3 |
| 5 | 2.7 | 3.5 |

From Table 7, a strong fibrous texture was exhibited, and overall evaluation as a livestock meat-like product was also high as the ratio of fermented soy pulp in the food composition was increased. In No. 5 in which the content of the fermented soy pulp was less than 5 mass%, the result was similar to that of the soy pulp powder having subjected to the patty shape forming step.

It is obvious that those skilled in the art can reach modified examples or corrected examples within the scope described in the claims, and it is understood that the examples of course belong to the technical scope of the invention. The constituent features in the embodiments may be combined freely within the scope which does not deviate from the contents of the invention.

The present application is based on a Japanese patent application filed on July 3, 2023 (patent application No. 2023-109596), and the contents thereof are incorporated in the present application by reference.

## Claims

1. A food composition comprising:
a fermented product of a plant material,
wherein a breaking stress at a time point when a breaking strain rate is 50% is 1.00 N/m² or more in a state of being formed into a patty shape.

2. The food composition according to claim 1, wherein the plant material is a grain-derived raw material.

3. The food composition according to claim 1 or 2, wherein the fermented product is a fermented product of a *koji* mold.

4. The food composition according to claim 1 or 2, wherein, in a sieving test using the food composition, a ratio of a mass of particles having a particle diameter of 1,000 µm or more and less than 4,500 µm to a total mass of the food composition is 5% or more.

5. The food composition according to claim 1 or 2,
wherein the food composition contains water,
a ratio of a mass of the fermented product to a total mass of the food composition is 5% to 40%, and a ratio of a mass of plant-based protein other than the fermented product to the total mass of the food composition is 4% to 40%.

6. The food composition according to claim 1 or 2,
wherein the food composition does not contain water,
a ratio of a mass of the fermented product to a total mass of the food composition is 20% to 100%, and a ratio of a mass of plant-based protein other than the fermented product to the total mass of the food composition is 0% to 80%.

7. The food composition according to claim 1 or 2, wherein the fermented product is a fermented product obtained by subjecting the plant material to a fermentation treatment and then performing drying.

8. A method for producing a food composition, the method comprising:
fermenting a plant material with a microorganism,
wherein the obtained food composition is the food composition according to claim 1 or 2.

9. The method for producing a food composition according to claim 8, further comprising:
drying a resultant obtained by fermenting the plant material with the microorganism.
